# EUROPEAN PATENT APPLICATION

(11) **EP 2 722 737 A1**
(43) Date of publication of application: **23.04.2014**
(21) Application number: 12873880.4
(22) Date of filing: 04.12.2012
(51) Int. Cl.: G06F 3/041

(54) **ELECTRIC CONNECTION STRUCTURE OF TOUCH CONTROL LIQUID CRYSTAL DISPLAY DEVICE**

(30) Priority: 17.08.2012 CN 201210293258
(71) Applicant: Shanghai Tianma Micro-Electronics Co., Ltd., 201201 Pudong New District, Shanghai (CN)
(72) Inventor: LI, Jialing, Pudong New District Shanghai 201201 (CN); HUANG, Zhongshou, Pudong New District Shanghai 201201 (CN); MA, Jun, Pudong New District Shanghai 201201 (CN)
(74) Representative: Dantz, Jan Henning
(86) International application number: PCT/CN2012/085858
(87) International publication number: WO 2014/026450

(57) **Abstract**

The present application discloses an electrical connection structure of a touch controlled liquid crystal display device, including: a first substrate; a plurality of first conductive pads on the first substrate, each of the first conductive pads being electrically connected with one first signal line; and at least one isolator between two adjacent first conductive pads. In the electrical connection structure of the touch controlled liquid crystal display device according to the present application, the isolator is arranged between two adjacent first conductive pads so that when the first conductive pads and the isolator are subsequently covered with conductive glue including conductive balls, the conductive balls in the conductive glue between two adjacent first conductive pads will not contact with each other to thereby ensure that the first conductive pads can be kept insulated from each other even if the conductive balls are distributed in the conductive glue at a high density.

## Description

The present application claims priority to Chinese Patent Application No. 201210293258.6, filed with the State Intellectual Property Office of China on August 17, 2012 and entitled "Electrical connection structure of touch controlled liquid crystal display device", the contents of which are hereby incorporated by reference in its entirety.

### Field of the Invention

The present invention relates to the field of liquid crystal display and particularly to an electrical connection structure of a touch controlled liquid crystal display device.

### Background of the Invention

Liquid Crystal Display (LCD) technology is the first flat panel display technology to enter manufacturing and is of interest in the current display industry. Since the liquid crystal phenomenon was initially discovered by the Austrian scientist in 1888, the liquid crystal display technology emerged in 1968, and has been in constant development in the dozens of years later. With the entry into the 21^{st} century, liquid crystal display technology has been further developed, and the development in this phase is primarily embodied by improving display quality, saving energy and achieving environment preservation, integrating other functions, and so on.

Since the birth of the first resistive touch controlled screen in the world in 1974, touch controlled technology made rapid progress, and various types of products, e.g., capacitive, resistive, infrared, and acoustic wave products, have emerged in the industry. The capacitive touch controlled screen has become predominant in the current market of touch controlled products due to its advantages, including precision and sensitivity in positioning, good touch feeling, long lifetime, and support of multipoint touch control.

The majority of existing capacitive touch controlled screens are configured in a plug-in structure, that is, a touch controlled screen panel is integrated on the outside of a display panel. However, this plug-in structure inevitably increases the thickness and weight of the entire display to thereby degrade the transmittance, which conflicts with the required light-weight and thin outline development trends of displays.

In view of this, an in-cell capacitive touch controlled screen has been proposed in the industry, that is, the capacitive touch controlled screen is integrated inside a display panel, to thereby achieve double effects of a high transmittance and a light-weight and thin product. Currently, the best integration approach is to integrate the capacitive touch controlled screen inside the liquid crystal display panel.

However, this in-cell capacitive touch controlled screen with the capacitive touch controlled screen integrated inside the liquid crystal display panel still suffers from numerous technology problems, one of which is the problem of connecting the touch control signal line of the in-cell capacitive touch controlled screen with the integrated circuit. The touch control signal line of the integrated in-cell capacitive touch controlled screen is arranged on the inside of the substrate of the liquid crystal panel, so the touch control signal line of the in-cell capacitive touch controlled screen can not be connected with the integrated circuit as done in the plug-in capacitive touch controlled screen. In order to connect the touch control signal line of the in-cell capacitive touch controlled screen with the integrated circuit, such a solution has been proposed that the conductive pads are arranged on the inside of the substrate of the liquid crystal panel and then the conductive pads on the liquid crystal panel are electrically connected to the integrated circuit through conductive glue including conductive balls. However, both a large area of the conductive pads inside the substrate of the liquid crystal panel and a large distance between two adjacent conductive pads are required in a usual design of this solution, to ensure that neither short-circuit nor mutual interference will arise between two adjacent conductive pads and an insignificant resistance will be maintained to thereby enable good conductivity between upper and lower conductive pads. However, both the large area of the conductive pads and the large distance between two adjacent conductive pads may result in a large periphery size of the in-cell touch controlled screen thereby influencing the overall size of a touch controlled display device. Moreover, the large distribution area of the conductive pads also requires a large amount of conductive glue, thereby increasing the cost.

### Summary of the Invention

As mentioned in the background of the present invention, in the solution where the conductive pads on the liquid crystal panel are electrically connected to the integrated circuit through the conductive glue, both the area of the conductive pads and the distance between two adjacent conductive pads are typically large so as to prevent a short circuit and mutual interference between the adjacent conductive pads, so the periphery size of the in-cell capacitive touch controlled screen is large to thereby influence the overall size of the touch controlled display device. Moreover, both the large area of the conductive pads and the large distance between two adjacent conductive pads may also result in a large distribution area of the conductive pads, thereby increasing the required conductive glue, thus the cost is increased.

In view of this, the present invention discloses an electrical connection structure of a touch controlled liquid crystal display device so as to solve the foregoing problems. The electrical connection structure of the touch controlled liquid crystal display device according to an embodiment of the present invention includes:
a first substrate;
a plurality of first conductive pads on the first substrate, each of the first conductive pads being electrically connected with one first signal line; and
at least one isolator disposed between two adjacent ones of the plurality of first conductive pads.

The present invention has the following advantages over the prior art.

Firstly, in the electrical connection structure of the touch controlled liquid crystal display device according to the present invention, the isolator is arranged between two adjacent first conductive pads so that when the first conductive pads and the isolator are subsequently covered with conductive glue including conductive balls, the conductive balls in the conductive glue between two adjacent first conductive pads will not contact with each other to thereby ensure that the first conductive pads can be kept insulated from each other even if the conductive balls are distributed in the conductive glue at a high density.

Secondly, in the electrical connection structure of the touch controlled liquid crystal display device according to the present invention, the isolator is arranged between two adjacent first conductive pads so that the conductive balls can be distributed in the conductive glue at a higher density, and the improved density of conductive balls in the conductive glue can improve the conductivity of the entire conductive glue, which allows the area of the conductive pad on the substrate of a liquid crystal panel to be made smaller, and the reduced area of the conductive pad has the area of the entire conductive pad region reduced.

Thirdly, in the electrical connection structure of the touch controlled liquid crystal display device according to the present invention, the isolator is arranged between two adjacent first conductive pads so that the distance between two adjacent conductive pads can be much smaller than that without the isolator, which further reduces the area of the conductive pad region so that the area of a peripheral region in the first substrate where the conductive pads are arranged can be made much smaller than the prior art, thereby also reducing the overall size of the entire touch controlled liquid crystal display device.

### Brief Description of the Drawings

Fig. 1 is a schematic diagram of an electrical connection structure of a touch controlled liquid crystal display device according to an embodiment of the present invention;
Fig. 2 is a schematic diagram of conductive glue according to an embodiment of the present invention; and
Fig. 3 is a schematic sectional diagram of an electrical connection structure of a touch controlled liquid crystal display device according to an embodiment of the present invention.

### Detailed Description of the Embodiments

As mentioned in the background of the present invention, in the solution where the conductive pads on the liquid crystal panel are electrically connected to the integrated circuit through the conductive glue, both the area of the conductive pads and the distance between two adjacent conductive pads are typically large so as to prevent short circuit and mutual interference between the adjacent conductive pads, so the periphery size of the in-cell capacitive touch controlled screen is large, thereby influencing the overall size of the touch controlled display device. Moreover, both the large area of the conductive pads and the large distance between two adjacent conductive pads may also result in a large distribution area of the conductive pads to thereby increase the required conductive glue, thus the cost is increased. In view of this, the embodiments of the present invention disclose an electrical connection structure of a touch controlled liquid crystal display device so as to solve the foregoing problems.

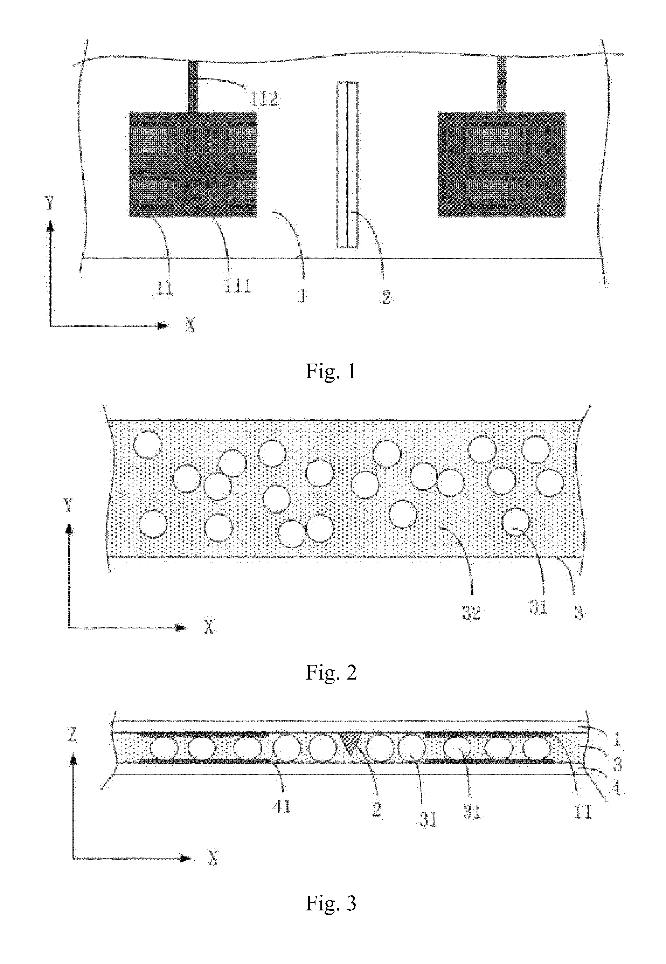

Referring to Fig. 1, Fig. 1 is a partial schematic diagram of an electrical connection structure of a touch controlled liquid crystal display device according to an embodiment of the present invention. As apparent from Fig. 1, the electrical connection structure of the touch controlled liquid crystal display device in this embodiment includes a first substrate 1, a plurality of first conductive pads 11 on the first substrate 1 (only two adjacent first conductive pads 11 are illustrated in Fig. 1 for example) and an isolator 2 between two adjacent first conductive pads 11. For convenient description, Fig. 1 illustrates plane coordinates including the X axis and the Y axis, and as can be apparent from Fig. 1, the length of the isolator 2 extends in the direction of the Y axis, and the width of the isolator 2 extends in the direction of the X axis, and the respective first conductive pads 11 are distributed in the direction of the X axis.

In this embodiment, the isolator 2 is arranged between two adjacent first conductive pads 11 so that when the first conductive pads 11 and the isolator 2 are subsequently covered with a conductive glue including conductive balls, the conductive balls in the conductive glue between two adjacent first conductive pads 11 do not contact with each other to thereby ensure that two adjacent first conductive pads 11 can be kept insulated from each other even if the conductive balls are distributed in the conductive glue at a high density. On the other hand, the presence of the isolator 2 enables the conductive balls distributed in the conductive glue at a high density. The increased density of conductive balls in the conductive glue, in turn, improves the conductivity of the conductive glue, which allows the area of the first conductive pads 11 on the substrate of a liquid crystal panel to be made smaller. The reduced area of the first conductive pads 11 enables the area of the entire conductive pad region to be reduced. Moreover, the presence of the isolator 2 further enables the distance between two adjacent first conductive pads 11 to be much smaller than that without the isolator 2, which further reduces the area of the conductive pad region. Therefore, the area of a peripheral region in the first substrate where the conductive pads are arranged can be made much smaller than that in the prior art, thereby also reducing the overall size of the entire touch controlled liquid crystal display device.

Further referring to Fig. 1, each first conductive pad 11 includes a main body 111 and a lead terminal 112. Although not illustrated in Fig. 1, the lead terminal 112 is electrically connected with one first signal line which is a touch control signal line, thus enabling the first conductive pad 11 to electrically connect with a touch control electrode pattern on the first substrate 1.

Referring to Fig. 2, Fig. 2 is a partial schematic diagram of the conductive glue according to an embodiment of the present invention, where the directions of the X and Y axis in Fig. 2 are the directions of the X and Y axis in Fig. 1, and the direction of the X axis in Fig. 1 is the same direction as in Fig. 3. As depicted in Fig. 2, a conductive glue 3 includes a plurality of conductive balls 31 distributed randomly and a glue body 32. In this embodiment, the conductive balls 31 can be made of gold, silver, copper or aluminum or of ball bodies plated with gold, silver, copper or aluminum. A diameter of the conductive balls 31 can range from 4.5µm to 15µm. The glue body 32 can be made of a material with highly waterproof characteristics, low polarity and low content of ions, e.g., thermosetting resin (e.g., epoxy resin glue) and UV curing resin. As further depicted in Fig. 2, the conductive balls 31 may contact with each other in both the direction of the X axis and the direction of the Y axis because the conductive glue 3 is made of the conductive balls 31 and the glue body 32 mixed and formulated in a specific mass ratio (which may vary from one material of the conductive balls to another), so the conductive balls 31 are distributed randomly in the glue body.

Referring to Fig. 3, Fig. 3 is a schematic sectional view of the electrical connection structure of the touch controlled liquid crystal display device according to an embodiment of the present invention. As apparent from Fig. 3, the electrical connection structure includes the first substrate 1 and the first conductive pads 11 on the surface of the first substrate 1. In this embodiment, a second substrate 4 arranged opposite to the first substrate 1 is further included in addition to the first substrate 1. The surface of the first substrate 1 on which the first conductive pads 11 are arranged faces the second substrate 4. There are a plurality of second conductive pads 41 on the surface of the second substrate 4 facing the first substrate 1. Each of the second conductive pads 41 corresponds to one first conductive pad 11. Preferably, the second conductive pads 41 may each include a main body and a lead terminal corresponding to those of the first conductive pad 11, and the lead terminal is electrically connected with one second signal line to receive a signal. Conductive glue 3 is filled throughout between the first substrate 1 and the second substrate 4, and the plurality of conductive balls 31 are distributed in the conductive glue 3. As apparent from Fig. 3, one part of the conductive balls 31 fall between the first conductive pads 11 and the second conductive pads 41, and this part of the conductive balls 31 electrically connect the first conductive pads 11 with the corresponding second conductive pads 41. And the other part of the conductive balls 31 fall between two adjacent first conductive pads 11 (that is, between two adjacent second conductive pads 41), and this part of the conductive balls 31 fail to electrically connect the first conductive pads 11 with the corresponding second conductive pads 41 and also may cause a short circuit between two adjacent first conductive pads 11 (and also possibly between two adjacent second conductive pads 41). Unfortunately, since the conductive glue 3 is a mixture of the glue body 32 and the conductive balls 31, this part of the conductive balls 31 inevitably exist. In view of this, the isolator 2 as illustrated in Fig. 3 is arranged between two adjacent first conductive pads 11 in this embodiment.,The isolator 2 is arranged for the purpose of effectively preventing the conductive balls 31 located between two adjacent first conductive pads 11 from contacting with each other and consequently preventing the conductive balls 31 from creating a short circuit between two adjacent first conductive pads 11. Since each second conductive pad 41 is electrically connected with a corresponding first conductive pad 11, a short circuit between two adjacent first conductive pads 11 and also between two adjacent second conductive pads 41 can be prevented.

Further referring to Fig. 3, the main body (see Fig. 1) of at least one of the first conductive pad 11 and the second conductive pad 41 has an area ranging from 100µm x 100µm to 500µm x 500µm in this embodiment. This is because the area of the main body of the first conductive pad 11 and the area of the main body of the second conductive pad 41 are typically made at 100µm x 100µm to thereby ensure the electrical connection between them so that they can contact a sufficient number of conductive balls 31 to thereby satisfy the electrical connection requirement. And the area of the main bodies of the first conductive pads 11 and the second conductive pads 41 is desirably designed smaller to thereby reduce their occupied area, so the area of their main bodies can be selected to be smaller than or equal to 500µm x 500µm. Without the arranged isolator 2 in the prior art, the area of the main bodies of the first conductive pads 11 and the second conductive pads 41 is typically required to be above 200µm x 200µm and even up to 1000µm x 1000µm at most. Accordingly, in this embodiment, when the area of the main bodies of the first conductive pads 11 and the second conductive pads 41 is designed as 100µm x 100µm, then the area of the main bodies of the first conductive pads 11 and the second conductive pads 41 may be reduced to one-fourth of that in designs without the isolator 2 and even smaller, thereby greatly reducing the area occupied by the first conductive pads 11 and the second conductive pads 41.

In this embodiment, the distance between two adjacent first conductive pads 11 can also be reduced together with the area of the main bodies of the first conductive pads 11 and the second conductive pads 41. In this embodiment, the distance between two adjacent first conductive pads can be selected to be larger than or equal to 100µm. Typically, the distance between two adjacent first conductive pads 11 is also limited to 1000µm or smaller so as to reduce as much as possible the distance between them. Without the isolator in the prior art, the distance between two adjacent first conductive pads 11 is typically required to be above 200µm so as to prevent a short circuit between two adjacent first conductive pads 11. The isolator 2 can be arranged to reduce the distance between two adjacent first conductive pads 11 and consequently reduce the area occupied by all the first conductive pads 11, which reduces the area on the first substrate 1 where the first conductive pads 11 are fabricated and in turn reduces the periphery area of a touch controlled liquid crystal display device.

In this embodiment, both the area occupied by the main bodies of the first conductive pads 11 and the second conductive pads 41 and the distance between two adjacent first conductive pads 11 are reduced without reducing the conductivity between the first conductive pad 11 and the second conductive pad 41. On the contrary, the conductivity between the first conductive pad 11 and the second conductive pad 41 can be improved as a result of this embodiment. Specifically, in this embodiment, the number of conductive balls 31 included per square millimeter on the surface of the main body 111 of the first conductive pad 11 can be up to 1500 to 5000. Without the arranged isolator 2 in the prior art, the number of conductive balls 31 included per square millimeter on the surface of the main body 111 of the first conductive pad 11 can be 1500 to 3000. Accordingly, the presence of the isolator 2 enables the density of conductive balls included in the conductive glue 3 to be increased, so that even though the area of the main body 111 of the first conductive pad 11 is made smaller, the number of conductive balls 31 between a corresponding pair of a first conductive pad 11 and a second conductive pad 41, and consequently the conductivity between the first conductive pad 11 and the second conductive pad 41 can be increased.

It shall be noted that in this embodiment, the height of the isolator 2 (the distance that the isolator 2 extends along the Z axis (i.e., the direction axis perpendicular to the X axis and the Y axis) as illustrated in Fig. 3) can range between the radius and the diameter of the conductive balls 31. Firstly, the diameter of the conductive balls 31 is typically approximate or equal to the distance between the first substrate 1 and the second substrate 4, so the height of the isolator 2 shall be larger than or equal to the radius of the conductive balls 31 so as to ensure the conductive balls 31 on both sides of the isolator 2 to be isolated by the isolator 2. This is because the conductive balls 31 are spherical and if two conductive balls 31 contact with each other, then there is a contact point sure to be on the straight line through the center of the sphere in the direction of the X axis, so the height of the contact point is the same as that of the center of the sphere, and this height is the radius of the conductive balls 31. Thus, two conductive balls 31 can be isolated and prevented from contacting with each other as long as the height of the isolator 2 is larger than or equal to the radius of the conductive balls 31. Furthermore, the height of the isolator 2 is required to be smaller than or equal to the diameter of the conductive balls 31, and since the diameter of the conductive balls 31 is typically approximate or equal to the distance between the first substrate 1 and the second substrate 4, if the height of the isolator 2 is larger than the diameter of the conductive balls 31, then the isolator 2 may be pressed against the first substrate 1 and the second substrate 4 to thereby form an arc on them. An arc so formed may disturb the desired parallel assembly between the first substrate 1 and the second substrate 4, degrading uniformity of cell gap of the liquid crystal panel and further possibly resulting in a failure of the entire touch controlled liquid crystal display device.

Furthermore, as apparent from Fig. 3, the height of the conductive balls 31 located between the first conductive pad 11 and the second conductive pad 41 is slightly smaller than that of the conductive balls 31 located between two adjacent first conductive pads 11. It shall be noted that firstly Fig. 3 is merely a schematic diagram but may not represent the size of the actual structure. Secondly, both the conductive balls 31 located between the first conductive pad 11 and the second conductive pad 41 and the conductive balls 31 located between two adjacent first conductive pads 11 may possibly be slightly compressed during packaging of the liquid crystal panel in practice, and as illustrated in Fig. 3, the conductive balls 31 located between the first conductive pad 11 and the second conductive pad 41 may be compressed a litter more, but all these conductive balls 31 can be considered substantially the same in nature.

It shall be noted that in this embodiment, the width of the isolator 2 (the distance that the isolator 2 extends in the direction of the X axis as illustrated in Fig. 3) can be selected to be less than or equal to twice the diameter of the conductive balls 31. This is because if the width of the isolator 2 is too large, then it may be connected directly with the first conductive pads 11 instead of being between two adjacent first conductive pads 11. If the isolator is connected directly with the first conductive pads 11, then the distribution of the conductive balls 31 on the first conductive pads 11 may be influenced to thereby possibly result in poor contact of the first conductive pads 11 with the second conductive pads 41. The minimal width of the isolator 2 is not limited and can be made at an arbitrarily small width as long as it can be achieved at a process level, and a smaller width will be better so that even if the conductive balls 31 falls on the isolator 2, they will slide onto the first substrate 1 instead of remaining on the isolator 2, thereby avoiding an influence upon the cell gap.

It shall be noted that in this embodiment, the isolator 2 is made of an insulating material for the purpose of insulating isolation and can be made of a transparent insulating material. More preferably the isolator 2 can be made of an organic insulating material. If there is a process step of making an insulating layer or a planar layer of the organic insulating material for the first substrate 1, then the isolator 2 can be fabricated together with the insulating layer or the planar layer so that the isolator 2 can be fabricated directly in the original process without introducing any other process, which is a preferred solution to fabricate the isolator 2.

It shall be noted that although not illustrated in Fig. 3, in this embodiment, the first conductive pad 11 is connected with one first signal line through its lead terminal 112 (also see Fig. 1), and the first signal line is connected with a touch control electrode pattern on the first substrate 1, and the second conductive pad 41 is connected with one second signal line through its lead terminal, and the second signal line is connected with an external integrated circuit, so that the first conductive pads 11, the second conductive pads 41 and the conductive glue 3 can be designed to thereby have the integrated circuit connected with the touch control electrode pattern. The foregoing integrated circuit is typically a touch control circuit in this solution.

It shall be noted that in this embodiment, the first substrate 1 and the second substrate 4 can be one of a color filter substrate and an array substrate in the liquid crystal display panel and different from each other, that is, when the first substrate 1 is a color filter substrate, the second substrate 4 is an array substrate; and when the first substrate 1 is an array substrate, the second substrate 4 is a color filter substrate.

It shall be noted that at least one of the first conductive pad 11 and the second conductive pad 41 includes a first structure layer which can be made of metal, metal oxide or a combination of metal and metal oxide. Furthermore, the at least one of the first conductive pad 11 and the second conductive pad 41 can further include a second structure layer on the first structure layer. The second structure layer can be made of metal, metal oxide or a combination of metal and metal oxide. For example, the first conductive pad 11 includes the first structure layer which is a metal layer and the second structure layer which is a metal oxide layer on the first structure layer. It shall be noted that the second structure layer can be in direct contact or in indirect electrical contact with the first structure layer.

As illustrated in Fig. 3, in this embodiment, the isolator 2 has a triangular cross section, and this triangular design helps to prevent the conductive balls 31 from falling on the isolator 2 otherwise influencing the cell gap of the liquid crystal panel. However, in another embodiment, the isolator 2 can alternatively have a trapezoidal, rectangular, semicircle or arc cross section. These shapes together with corresponding designs of their height and width also can enable the conductive balls 31 to be isolated by the isolator 2.

In this embodiment, the isolator 2 appears a straight line in the length direction thereof, that is, extends in the direction of the Y axis (see Fig. 1), but in another embodiment, the isolator 2 can alternatively be a zigzag, a wavy line or a folded line extending in the direction of the Y axis in Fig. 1. And in this embodiment, the isolator 2 is perpendicular to the direction of the X axis, and in another embodiment, the isolator 2 may alternatively not be perpendicular to the X axis but appear at a sharp angle from the X axis as long as the isolator 2 is ensured to be still between two adjacent first conductive pads 11.

It shall be noted that no matter whether the isolator 2 is perpendicular to the X axis in Fig. 1 (also see Fig. 2), the length of the isolator 2 in the direction of the Y axis is larger than or equal to the length of the conductive glue 3 in the direction of the Y axis, and longitudinal ends of the isolator 2 are located according to three possible scenarios: i) the both longitudinal ends of the isolator 2 are aligned respectively with two opposing edges of the conductive glue 3 in the direction of the Y axis; ii) the both longitudinal ends of the isolator 2 extend respectively beyond the two opposing edges of the conductive glue 3 in the direction of the Y axis; and iii) one longitudinal end of the isolator 2 extends beyond one of the two opposing edges of the conductive glue 3 and the other longitudinal end of the isolator 2 is aligned with the other edge of the two opposing edges of the conductive glue 3 in the direction of the Y axis.

In addition to the foregoing embodiment, an embodiment of the invention further provides another electrical connection structure of a touch controlled liquid crystal display device. The electrical connection structure includes a first substrate and a flexible circuit board arranged opposite to the first substrate, where there are a plurality of first conductive pads arranged on the inside surface of the first substrate, and each first conductive pad is electrically connected with one first signal line, and there is at least one isolator arranged between two adjacent first conductive pads. There are a plurality of copper foils arranged on the inside surface of the flexible circuit board. The electrical connection structure further includes conductive glue with which the first conductive pads and the isolator are covered and which includes an insulating glue body and conductive balls distributed in the glue body. Each of the copper foils is electrically connected with one first conductive pad correspondingly through the conductive glue. In this embodiment, the first substrate or the conductive glue or the first conductive pads or the isolator has the features of the first substrate or the conductive glue or the first conductive pads or the isolator respectively described in any one of the foregoing embodiments, and the differences from all the foregoing embodiments lie in that the electrical connection structure does not include the second substrate but includes the flexible circuit board arranged opposite to the first substrate, and the plurality of copper foils are arranged on the inside of the flexible circuit board, and each copper foil is electrically connected with one first conductive pad correspondingly through the conductive balls in the conductive glue.

The respective sections of this specification give a description in a progressive manner, each section puts an emphasis on a difference(s) from the other sections, and for common or like points across the respective sections, reference can be made to each other.

Although the preferred embodiments of the invention have been described, those skilled in the art benefiting from the underlying inventive concept can make additional modifications and variations to these embodiments. Therefore, the appended claims are intended to be construed as encompassing the preferred embodiments and all the modifications and variations coming into the scope of the invention.

Evidently, those skilled in the art can make various modifications and variations to the invention without departing from the scope of the invention. Thus, the invention is also intended to encompass these modifications and variations thereto so long as the modifications and variations come into the scope of the claims appended to the invention and their equivalents.

## Claims

1. An electrical connection structure of a touch controlled liquid crystal display device, comprising:
a first substrate;
a plurality of first conductive pads on the first substrate, each of the first conductive pads being electrically connected with one first signal line; and
at least one isolator disposed between two adjacent ones of the plurality of first conductive pads.

2. The electrical connection structure of the touch controlled liquid crystal display device according to claim 1, wherein the electrical connection structure further comprises a conductive glue adapted to cover the first conductive pads and the isolator, and the conductive glue comprises an insulating glue body and conductive balls distributed in the glue body.

3. The electrical connection structure of the touch controlled liquid crystal display device according to claim 2, wherein the electrical connection structure further comprises a second substrate arranged opposite to the first substrate, and a plurality of second conductive pads are arranged on an inside of the second substrate, and each of the second conductive pads is electrically connected with one of the first conductive pads correspondingly through the conductive balls in the conductive glue.

4. The electrical connection structure of the touch controlled liquid crystal display device according to claim 3, wherein the first substrate and the second substrate are respectively one of a color filter substrate and an array substrate, and the first substrate is different from the second substrate.

5. The electrical connection structure of the touch controlled liquid crystal display device according to claim 3, wherein the first conductive pad and/or the second conductive pad comprises a first structure layer made of metal, metal oxide or a combination of metal and metal oxide.

6. The electrical connection structure of the touch controlled liquid crystal display device according to claim 5, wherein the first conductive pad and/or the second conductive pad further comprises a second structure layer on the first structure layer, and the second structure layer is made of metal, metal oxide or a combination of metal and metal oxide.

7. The electrical connection structure of the touch controlled liquid crystal display device according to claim 3, wherein the first conductive pad and/or the second conductive pad comprises a main body and a lead terminal, and the lead terminal of the first conductive pad is electrically connected with the first signal line, or the lead terminal of the second conductive pad is electrically connected with a second signal line.

8. The electrical connection structure of the touch controlled liquid crystal display device according to claim 7, wherein the first signal line is configured to connect the first conductive pad to a touch control electrode pattern on the first substrate, the second signal line is configured to connect the second conductive pad to an external integrated circuit.

9. The electrical connection structure of the touch controlled liquid crystal display device according to claim 7, wherein the area of the main body of the first conductive pad and/or the main body of the second conductive pad is in a range from 100µm x 100µm to 500µm x 500µm.

10. The electrical connection structure of the touch controlled liquid crystal display device according to claim 9, wherein the number of conductive balls included per square millimeter on the surface of the main body of the first conductive pad is in a range from 1500 to 5000.

11. The electrical connection structure of the touch controlled liquid crystal display device according to claim 1, wherein the distance between two adjacent ones of the plurality of first conductive pads is larger than or equal to 100µm.

12. The electrical connection structure of the touch controlled liquid crystal display device according to claim 1, wherein the isolator has a triangular, trapezoidal, rectangular, semicircle or arc cross section; or
the isolator is formed as a straight line, a zigzag, a wavy line or a folded line in the length direction thereof.

13. The electrical connection structure of the touch controlled liquid crystal display device according to claim 3, wherein both longitudinal ends of the isolator are aligned respectively with two opposing edges of the conductive glue; or both longitudinal ends of the isolator extend respectively beyond two opposing edges of the conductive glue; or one longitudinal end of the isolator extends beyond one of two opposing edges of the conductive glue and the other longitudinal end of the isolator is aligned with the other edge of the two opposing edges of the conductive glue.

14. The electrical connection structure of the touch controlled liquid crystal display device according to claim 3, wherein the diameter of the conductive ball is in a range from 4.5µm to 15µm.

15. The electrical connection structure of the touch controlled liquid crystal display device according to claim 3, wherein the height of the isolator is in a range between the radius and the diameter of the conductive ball.

16. The electrical connection structure of the touch controlled liquid crystal display device according to claim 3, wherein the width of the isolator is smaller than or equal to twice the diameter of the conductive ball.

17. The electrical connection structure of the touch controlled liquid crystal display device according to claim 3, wherein the isolator is made of a transparent insulating material; or
the isolator is made of an organic insulating material.

18. The electrical connection structure of the touch controlled liquid crystal display device according to claim 2, wherein the electrical connection structure further comprises a flexible circuit board arranged opposite to the first substrate, and a plurality of copper foils are arranged inside of the flexible circuit board, and each of the copper foils is electrically connected with one of the first conductive pads correspondingly through the conductive balls in the conductive glue.
